# EUROPEAN PATENT APPLICATION

(11) **EP 4 316 868 A1**
(43) Date of publication of application: **07.02.2024**
(21) Application number: 21937959.1
(22) Date of filing: 25.10.2021
(51) Int. Cl.: B60C 1/00, C07F 5/02, C08C 19/42, C08F 36/04, C08L 15/00

(54) **PHENYLBORONIC ACID COMPOUND, MODIFIED POLYMER, POLYMER COMPOSITION, AND TIRE**

(30) Priority: 19.04.2021 JP 2021070484
(71) Applicant: Sumitomo Rubber Industries, Ltd., Kobe-shi, Hyogo 651-0072 (JP)
(72) Inventor: JIANG, Lan, Kobe-shi, Hyogo 651-0072 (JP)
(74) Representative: Manitz Finsterwald Patent- und Rechtsanwaltspartnerschaft mbB
(86) International application number: PCT/JP2021/039219
(87) International publication number: WO 2022/224469

(57) **Abstract**

Provided are a phenylboronic acid compound that can provide a polymer with the ability to undergo a reversible change in physical properties in response to water, a polymer that exhibits a reversible change in physical properties in response to water, and a polymer composition and a tire each containing the polymer. The present invention relates to a phenylboronic acid compound represented by the following Formula (1-1): 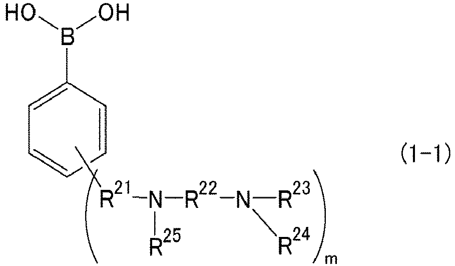 wherein R²¹ and R²² are the same or different and each represent an optionally substituted divalent hydrocarbon group that optionally contains a heteroatom, R²³ to R²⁵ are the same or different and each represent a hydrogen atom or an optionally substituted monovalent hydrocarbon group that optionally contains a heteroatom, and m represents an integer of 1 to 5.

## Description

### TECHNICAL FIELD

The present invention relates to a phenylboronic acid compound, a modified polymer, a polymer composition, and a tire.

### BACKGROUND ART

Various polymers have been used in tires and other products with the desire to provide various properties derived from the polymers.

### SUMMARY OF INVENTION

### TECHNICAL PROBLEM

The present invention aims to solve the above problem and provide a phenylboronic acid compound that can provide a polymer with the ability to undergo a reversible change in physical properties in response to water, a polymer that exhibits a reversible change in physical properties in response to water, and a polymer composition and a tire each containing the polymer.

### SOLUTION TO PROBLEM

The present invention relates to a phenylboronic acid compound represented by the following Formula (1-1): 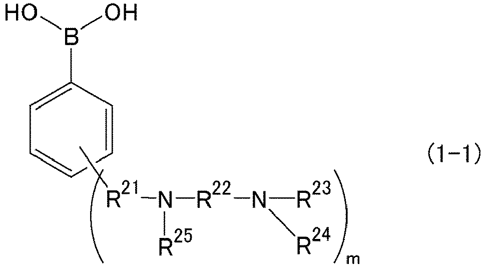 wherein R²¹ and R²² are the same or different and each represent an optionally substituted divalent hydrocarbon group that optionally contains a heteroatom, R²³ to R²⁵ are the same or different and each represent a hydrogen atom or an optionally substituted monovalent hydrocarbon group that optionally contains a heteroatom, and m represents an integer of 1 to 5.

### ADVANTAGEOUS EFFECTS OF INVENTION

The phenylboronic acid compound of Formula (1-1) according to the present invention can provide a polymer with the ability to undergo a reversible change in physical properties in response to water.

### BRIEF DESCRIPTION OF DRAWINGS

FIG. 1 shows an example of the synthesis of a phenylboronic acid compound represented by Formula (1).
FIG. 2 shows examples of ¹H-NMR spectra of synthetic products.
FIG. 3 shows synthetic examples illustrating routes to the synthesis of a modified polymer through the reaction between a phenylboronic acid compound and a polymer.
FIG. 4 shows examples of IR spectra and ¹H-NMR spectra of synthetic products, etc.

### DESCRIPTION OF EMBODIMENTS

### <Modified polymer>

The present invention relates to a modified polymer which has been modified by a phenylboronic acid compound represented by the Formula (1) below. The modified polymer can exhibit a reversible change in physical properties in response to water.

The reason for the above advantageous effect is not exactly clear, but it is assumed to be due to the following mechanism.

When a modified polymer obtained by reacting a polymer with a phenylboronic acid compound of Formula (1) is dried, three molecules are reversibly dehydrated and condensed to form boroxine (boroxine crosslinks). Then, when in contact with water, the formed boroxine crosslinks are broken. Thus, a polymer with boroxine crosslinks is formed when dry, while the boroxine crosslinks are broken to form the modified polymer when wet with water. Accordingly, the modified polymer can exhibit a reversible change in physical properties in response to water. Moreover, for example, when the modified polymer is used in a tire, it is assumed that the elastic modulus may be reduced upon contact with water to increase loss on the wet road surface, resulting in improved wet grip performance.

The modified polymer is a polymer modified by a phenylboronic acid compound represented by the following Formula (1): 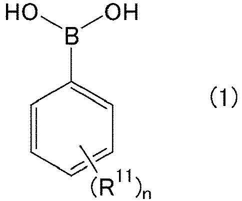 wherein each R¹¹ is the same or different and represents an optionally substituted monovalent hydrocarbon group that optionally contains a heteroatom, and n represents an integer of 1 to 5.

Examples of the monovalent hydrocarbon group constituting the backbone of R¹¹ in Formula (1) include linear, cyclic, or branched alkyl, alkenyl, aryl, and aralkyl groups, with alkyl groups being particularly preferred. The number of carbons of R¹¹ is preferably 1 or more, more preferably 2 or more, still more preferably 3 or more, and it is preferably 30 or less, more preferably 20 or less, still more preferably 10 or less, particularly preferably 6 or less. Specific examples include a methyl group, an ethyl group, a n-propyl group, an isopropyl group, a n-butyl group, an iso-butyl group, a sec-butyl group, a tert-butyl group, a pentyl group, a hexyl group, a heptyl group, a 2-ethylhexyl group, an octyl group, a nonyl group, and a decyl group.

The substituent in R¹¹ in Formula (1) may be added to or introduced into the backbone of the monovalent hydrocarbon group constituting the backbone of R¹¹. The substituent is not limited and may be a known group. Examples include C1-C4 alkoxy groups such as a methoxy group, an ethoxy group, and a butoxy group, halogen atoms such as chlorine, bromine, iodine, and fluorine, C6-C12 aryl groups such as a phenyl group, a naphthyl group, and a biphenyl group, and polar groups such as an oxo group (=O), a hydroxy group, a carboxyl group, a carbonyl group, an amino group, an acetyl group, an amide group, and an imide group. From the standpoint of reactivity with polymers, the substituent is preferably a carboxyl group, an amino group, or a thiol group.

To better achieve the ability to undergo a reversible change in physical properties in response to water, the substituent is preferably a nitrogen atom-containing group, more preferably an amino group.

The reason for the above advantageous effect is not exactly clear, but it is assumed to be due to the following mechanism.

As described above, when a modified polymer obtained by reaction with a phenylboronic acid compound of Formula (1) is dried, three molecules are reversibly dehydrated and condensed to form boroxine (boroxine crosslinks). Then, when in contact with water, the formed boroxine crosslinks are broken. This is believed to provide the ability to undergo a reversible change in physical properties in response to water. Moreover, when normal phenylboroxine is decomposed by water, dehydration and recondensation of three molecules require heating; in contrast, for a nitrogen atom-containing phenylboronic acid compound, especially a phenylboronic acid compound in which a nitrogen atom is present in the vicinity of a phenylboroxine group, dehydration and recondensation of three molecules can occur even at room temperature. Thus, it is assumed that the use of the modified polymer can better provide the ability to undergo a reversible change in physical properties in response to water.

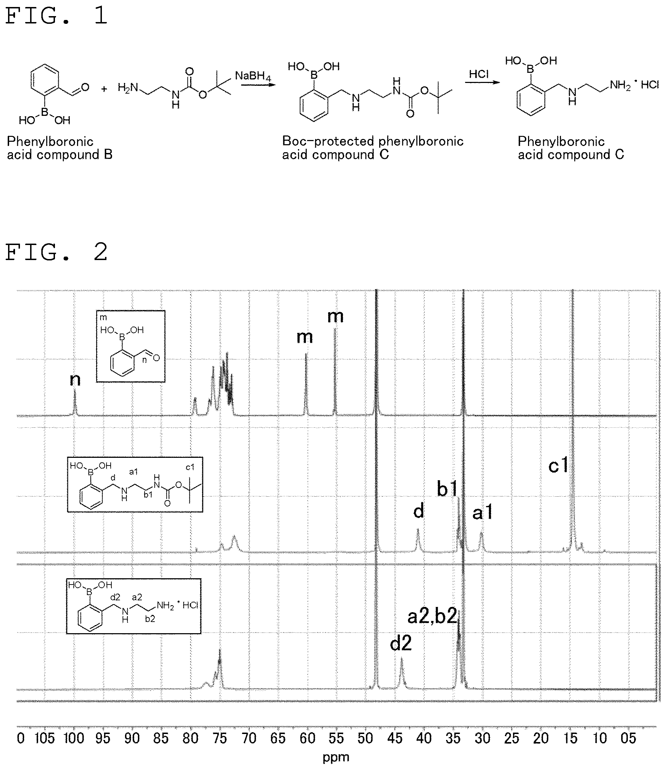

When R¹¹ in Formula (1) has a nitrogen atom, the nitrogen atom is preferably bound to the boron atom in the phenylboronic acid compound of Formula (1) via one to six carbon atoms in order to achieve the ability to undergo a reversible change in physical properties in response to water. The number of carbon atoms via which they are bound is preferably 2 to 5, more preferably 2 to 4, still more preferably 2 or 3. For example, the below-mentioned phenylboronic acid compound C shown in FIG. 1 is a compound in which a nitrogen atom is bound to a boron atom via three carbon atoms.

Examples of the amino group as the substituent in R¹¹ include a primary amino group (-NH₂), a secondary amino group (-NHR¹), and a tertiary amino group (-NR¹R²). Examples of R¹ and R² include alkyl, phenyl, and aralkyl groups. The number of carbons of R¹ or R² is preferably 1 to 8. The amino group may form an ammonium base, and examples include a tertiary ammonium base and a quaternary ammonium base. Other examples of the amino group include divalent amino groups. Examples of the divalent amino groups include -N(H)- and -N(R³)-. Examples of R³ include alkyl, phenyl, and aralkyl groups. The number of carbons of R³ is preferably 1 to 8. For example, a divalent amino group may be introduced into the backbone of R¹¹.

Examples of the heteroatom in R¹¹ include a nitrogen atom, an oxygen atom, and a sulfur atom. To better achieve the advantageous effect, a nitrogen atom is preferred among these.

To better achieve the advantageous effect, n in Formula (1) is preferably 1 to 4, more preferably 1 to 3, still more preferably 1 or 2, particularly preferably 1.

To better achieve the advantageous effect, the phenylboronic acid compound of Formula (1) is suitably a compound represented by the following Formula (1-1): 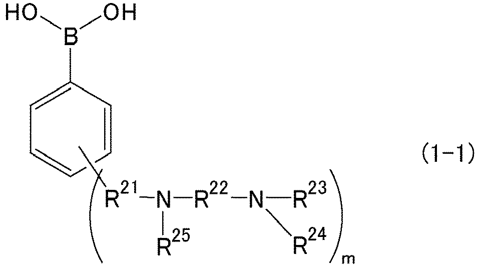 wherein R²¹ and R²² are the same or different and each represent an optionally substituted divalent hydrocarbon group that optionally contains a heteroatom, R²³ to R²⁵ are the same or different and each represent a hydrogen atom or an optionally substituted monovalent hydrocarbon group that optionally contains a heteroatom, and m represents an integer of 1 to 5.

The reason for the above advantageous effect is not exactly clear, but it is assumed to be due to the following mechanism.

As described above, when normal phenylboroxine is decomposed by water, dehydration and recondensation of three molecules require heating; in contrast, especially for the phenylboronic acid compound of Formula (1-1), dehydration and recondensation of three molecules can occur even at room temperature. Thus, it is assumed that the use of the modified polymer can better provide the ability to undergo a reversible change in physical properties in response to water.

The divalent hydrocarbon group constituting the backbone of R²¹ or R²² in Formula (1-1) may be linear, cyclic, or branched, and examples include alkylene, alkenylene, cycloalkylene, cycloalkylalkylene, arylene, and aralkylene groups. The number of carbons of R²¹ or R²² is preferably 1 to 30, more preferably 1 to 15, still more preferably 1 to 8, particularly preferably 1 to 5. Specific examples include a methylene group, an ethylene group, a trimethylene group, a tetramethylene group, a pentamethylene group, and a hexamethylene group.

The substituent in R²¹ or R²² may be added to or introduced into the backbone of the divalent hydrocarbon group constituting the backbone of R²¹ or R²². The substituent is not limited, and examples include those listed for the substituent in R¹¹. Examples of the heteroatom in R²¹ or R²² include those listed for the heteroatom in R¹¹.

Examples of the monovalent hydrocarbon group constituting the backbone of any of R²³ to R²⁵ include those listed for the monovalent hydrocarbon group constituting the backbone of R¹¹. The substituent in any of R²³ to R²⁵ may be added to or introduced into the backbone of the monovalent hydrocarbon group constituting the backbone of any of R²³ to R²⁵. The substituent is not limited, and examples include those listed for the substituent in R¹¹. Also, examples of the heteroatom in any of R²³ to R²⁵ include those listed for the heteroatom in R¹¹.

In particular, R²³ is preferably a hydrogen atom or a monovalent hydrocarbon group, more preferably a hydrogen atom, in order to better achieve the advantageous effect.

R²⁴ is preferably a hydrogen atom or a monovalent hydrocarbon group, more preferably a hydrogen atom, in order to better achieve the advantageous effect.

R²⁵ is preferably a hydrogen atom or a monovalent hydrocarbon group, more preferably a hydrogen atom, in order to better achieve the advantageous effect.

To better achieve the advantageous effect, m in Formula (1-1) is preferably 1 to 4, more preferably 1 to 3, still more preferably 1 or 2, particularly preferably 1.

The phenylboronic acid compound of Formula (1) can be synthesized in accordance with known methods. An example of a method for synthesizing the phenylboronic acid compound is described below although the phenylboronic acid compound is not limited to that obtained by such a synthesis method and encompasses those obtained by any synthesis method that can synthesize the phenylboronic acid compound.

For example, the phenylboronic acid compound of Formula (1) may be synthesized by reacting a specific phenylboronic acid compound with a compound capable of introducing the group of R¹¹.

The reaction is usually performed in a solvent.

The solvent used in the reaction is not limited and may be appropriately selected from those which allow the reaction to proceed. Examples include ethers such as ethylene glycol dimethyl ether, tetrahydrofuran, and 1,4-dioxane, aromatic hydrocarbons such as toluene, water, and mixtures of these. An appropriate known catalyst may be used in the reaction, and examples include palladium catalysts. The amount of the catalyst used in the reaction may be appropriately selected. The mixing ratio of the phenylboronic acid compound and the compound capable of introducing the group of R¹¹ used in the reaction may be appropriately selected within a range which allows the reaction to proceed. The reaction temperature is usually in the range of 50°C to 110°C. The reaction time is usually in the range of 1 to 24 hours. After completion of the reaction, the reaction mixture may appropriately be subjected to post treatment, such as extraction with an organic solvent and concentration of the organic layer, to isolate the target product, which may optionally be further purified by recrystallization, chromatography, etc.

An example of the synthesis of a particular compound is described. For example, a phenylboronic acid compound C may be synthesized via the synthetic route shown in FIG. 1.

As shown in FIG. 1, the phenylboronic acid compound C may be synthesized, for example, by reacting a phenylboronic acid compound B with an amine compound in a solvent (methanol) at room temperature overnight and reducing the reaction product with sodium borohydride (NaBH₄), followed by deprotection of the tert-butoxycarbonyl (Boc) group with hydrochloric acid (HCl).

The polymer constituting the backbone of the modified polymer is not limited and may be any polymer.

The polymer may be either an unmodified or modified polymer.

The modified polymer may be any polymer having a functional group. Examples include a chain end-modified polymer obtained by modifying at least one chain end of a polymer by a compound (modifier) having the functional group (i.e., a chain end-modified polymer terminated with the functional group); a backbone-modified polymer having the functional group in the backbone; a backbone- and chain end-modified polymer having the functional group in both the backbone and chain end (e.g., a backbone- and chain end-modified polymer in which the backbone has the functional group and at least one chain end is modified by the modifier); and a chain end-modified polymer into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxy group, an oxy group, and an epoxy group. These functional groups may be substituted. From the standpoint of reactivity with the phenylboronic acid compound of Formula (1), etc., an amino group, an epoxy group, a carboxyl group, and the like are preferred among these.

Examples of the polymer include polymers having a carbon-carbon double bond.

Examples of the polymers having a carbon-carbon double bond include polymers such as diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include polymers such as butyl-based rubbers and fluororubbers. From the standpoint of reactivity with the phenylboronic acid compound of Formula (1), etc., isoprene-based rubbers, NBR, BR, and SBR are preferred among these, with isoprene-based rubbers, NBR, and SBR being more preferred. These may be used alone or in combinations of two or more.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. As seen in the above examples, the isoprene-based rubbers may be either unmodified isoprene-based rubbers or modified isoprene-based rubbers (e.g., ENR). These may be used alone or in combinations of two or more.

From the standpoint of reactivity with the phenylboronic acid compound of Formula (1), etc., the isoprene-based rubbers are preferably modified isoprene-based rubbers. Examples of the functional groups added in the modified isoprene-based rubbers include the above-listed functional groups, with an epoxy group or a carboxyl group being preferred among these.

Any BR may be used, including, for example, high-cis BR having a high cis content, BR containing syndiotactic polybutadiene crystals, and BR synthesized using rare earth catalysts (rare earth-catalyzed BR). These may be used alone or in combinations of two or more. To improve abrasion resistance, high-cis BR having a cis content of 90% by mass or higher is preferred among these. The BR may be either unmodified BR or modified BR (e.g., carboxylic acid-modified BR). These may be used alone or in combinations of two or more.

From the standpoint of reactivity with the phenylboronic acid compound of Formula (1), etc., the BR is preferably modified BR. Examples of the functional groups added in the modified BR include the above-listed functional groups, with a carboxyl group, an amino group, or an epoxy group being preferred among these.

The BR may be commercially available from, for example, Ube Industries, Ltd., JSR Corporation, Asahi Kasei Corporation, Zeon Corporation, etc.

Any SBR may be used. Examples include emulsion-polymerized styrene-butadiene rubbers (E-SBR) and solution-polymerized styrene-butadiene rubbers (S-SBR). These may be used alone or in combinations of two or more. The SBR may be either unmodified SBR or modified SBR (e.g., carboxylic acid-modified SBR). These may be used alone or in combinations of two or more.

From the standpoint of reactivity with the phenylboronic acid compound of Formula (1), etc., the SBR is preferably modified SBR. Examples of the functional groups added in the modified SBR include the above-listed functional groups, with a carboxyl group, an amino group, or an epoxy group being preferred among these.

The styrene content of the SBR is preferably 3% by mass or higher, more preferably 5% by mass or higher, still more preferably 7% by mass or higher. The styrene content is also preferably 60% by mass or lower, more preferably 55% by mass or lower, still more preferably 50% by mass or lower. When the styrene content is within the range indicated above, tire performance such as wet grip performance tends to be better achieved.

Herein, the styrene content of the SBR is determined by ¹H-NMR.

The vinyl content of the SBR is preferably 3% by mass or higher, more preferably 5% by mass or higher, still more preferably 7% by mass or higher. The vinyl content is preferably 60% by mass or lower, more preferably 55% by mass or lower, still more preferably 50% by mass or lower. When the vinyl content is within the range indicated above, tire performance such as wet grip performance tends to be better achieved.

Here, the vinyl content (1,2-butadiene unit content) can be measured by infrared absorption spectrometry.

For example, products manufactured or sold by Sumitomo Chemical Co., Ltd., JSR Corporation, Asahi Kasei Corporation, Zeon Corporation, etc. may be used as the SBR.

In addition to the above-described polymers such as diene rubbers, butyl-based rubbers, and fluororubbers, examples of the polymer also include liquid polymers (e.g., liquid resins, liquid diene polymers, liquid farnesene polymers) which are liquid at room temperature (25°C).

Examples of the liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of these resins are also usable.

Examples of the liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain end or backbone of these polymers may be modified by a polar group. Hydrogenated products of these polymers are also usable.

The term "liquid farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

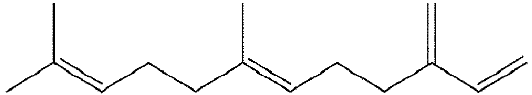

The liquid farnesene polymers may be either homopolymers of farnesene (farnesene homopolymers) or copolymers of farnesene and vinyl monomers (farnesene-vinyl monomer copolymers). These may be used alone or in combinations of two or more. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Liquid farnesene polymers having a weight average molecular weight (Mw) of 3,000 to 300,000 may be suitably used. The Mw of the liquid farnesene polymers is preferably 8,000 or more, more preferably 10,000 or more, and it is preferably 100,000 or less, more preferably 60,000 or less, still more preferably 50,000 or less.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) and calibrated with polystyrene standards.

The polymer used may also be a resin (resin which is solid at room temperature (25°C)).

Examples of the resin (resin which is solid at room temperature (25°C)) include aromatic vinyl polymers, coumarone-indene resins, coumarone resins, indene resins, phenol resins, rosin resins, petroleum resins, terpene resins, and acrylic resins, all of which are solid at room temperature (25°C). The resin may also be hydrogenated. These resins may be used alone or in combinations of two or more.

The softening point of the resin is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, tire performance such as wet grip performance tends to be better achieved. Here, the softening point of the resin is determined as set forth in JIS K 6220-1:2001 using a ring and ball softening point measuring apparatus and defined as the temperature at which the ball drops down.

The aromatic vinyl polymers refer to polymers containing aromatic vinyl monomers as structural units. Examples include resins produced by polymerizing α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components constituting the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component constituting the skeleton (backbone) of the resins.

The indene resins refer to resins containing indene as the main monomer component constituting the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by the reaction in the presence of an acid catalyst, such as novolac phenol resins.

Examples of the rosin resins include rosin-based resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of these resins. DCPD resins or hydrogenated DCPD resins are preferred among these.

The terpene resins refer to polymers containing terpenes as structural units. Examples include polyterpene resins produced by polymerizing terpene compounds, and aromatic modified terpene resins produced by polymerizing terpene compounds and aromatic compounds. Examples of the aromatic modified terpene resins include terpene phenol resins made from terpene compounds and phenolic compounds, terpene styrene resins made from terpene compounds and styrene compounds, and terpene phenol styrene resins made from terpene compounds, phenolic compounds, and styrene compounds. Here, examples of the terpene compounds include α-pinene and β-pinene; examples of the phenolic compounds include phenol and bisphenol A; and examples of the aromatic compounds include styrene compounds such as styrene and α-methylstyrene.

The acrylic resins refer to polymers containing acrylic monomers as structural units. Examples include styrene acrylic resins such as those which contain carboxy groups and are produced by copolymerizing aromatic vinyl monomer components and acrylic monomer components. Solvent-free, carboxy group-containing styrene acrylic resins are suitable among these.

The process of reaction between the phenylboronic acid compound of Formula (1) and the polymer is not limited and may be performed by a known method. It may be carried out in a solvent such as water or an organic solvent or without a solvent. The solvent is not limited and is preferably one that will readily dissolve both the phenylboronic acid compound and the polymer. Specific examples of the solvent include the above-listed solvents. The reaction temperature and time may be set appropriately to allow the reaction to proceed, depending on the particular phenylboronic acid compound and polymer.

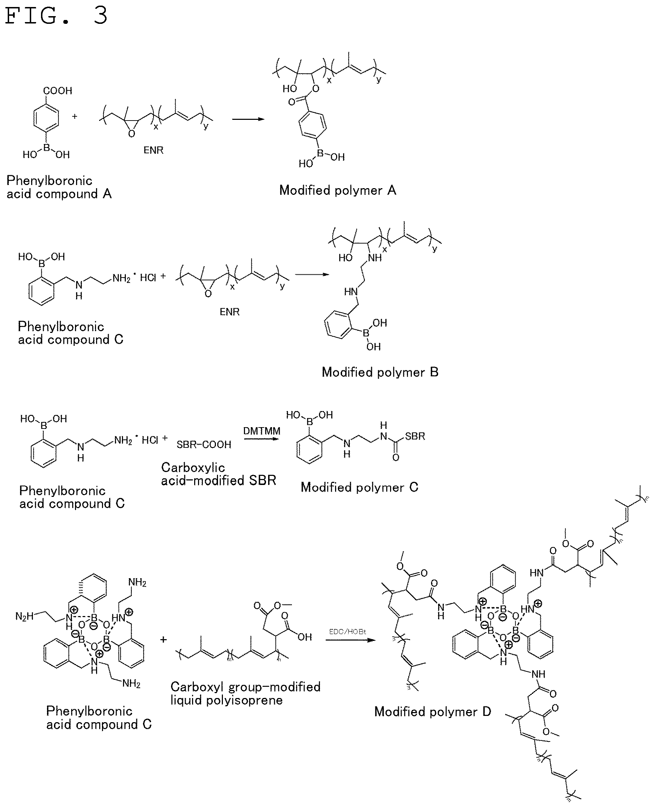

Examples of the synthesis of particular compounds are described. For example, modified polymers A to D may be synthesized via the synthetic routes shown in FIG. 3.

Specifically, for example, the phenylboronic acid compound A or C shown in FIG. 3 and an epoxidized natural rubber (ENR), an amino group-containing NBR (amine-modified NBR), a carboxyl group-containing SBR (carboxylic acid-modified SBR), or a carboxyl group-modified liquid polyisoprene may be dissolved in a solvent, the thus prepared solution may be stirred at an appropriate temperature to cause a reaction, and after completion of the reaction, the solution containing a product may be precipitated in methanol and then dried to obtain the target reaction product (polymer modified by a phenylboronic acid compound of Formula (1), modified polymer A to D).

The modified polymer may be either a modified polymer which is solid at 25°C or a modified polymer which is liquid at 25°C.

Examples of the modified polymer which is solid at 25°C include modified ones of polymers which are solid at room temperature (25°C) such as the above-described diene rubbers, butyl-based rubbers, and fluororubbers. Desirable among these are modified polymers which are solid at 25°C and have a weight average molecular weight (Mw) of 10000 or more.

Examples of the modified polymer which is liquid at 25°C include modified ones of liquid polymers which are liquid at room temperature (25°C) such as the above-described liquid resins, liquid diene polymers, and liquid farnesene polymers.

### <Polymer composition>

The polymer composition contains a modified polymer which has been modified by a phenylboronic acid compound of Formula (1). The use of the polymer composition provides the ability to undergo a reversible change in physical properties in response to water. The polymer composition may contain any embodiment of the above-described modified polymer. Specifically, examples of the polymer composition include compositions containing at least one of modified ones of polymers which are solid at room temperature (25°C) such as the above-described diene rubbers, butyl-based rubbers, and fluororubbers and modified ones of liquid polymers which are liquid at room temperature (25°C) such as the above-described liquid resins, liquid diene polymers, and liquid farnesene polymers. For example, when the polymer composition is used in a tire component, the elastic modulus may be reduced upon contact with water to increase loss on the wet road surface, resulting in improved wet grip performance.

The amount of modified polymers which have been modified by phenylboronic acid compounds of Formula (1) based on 100% by mass of the polymer component content in the polymer composition is not limited, and it is preferably 1% by mass or more, more preferably 3% by mass or more, still more preferably 5% by mass or more. The upper limit is not limited, and it is preferably 70% by mass or less, more preferably 50% by mass or less, still more preferably 30% by mass or less. When the amount is within the range indicated above, the advantageous effect tends to be suitably achieved.

The polymer composition may contain additional polymers other than the modified polymer which has been modified by the phenylboronic acid compound of Formula (1). Examples of the additional polymers include the above-described diene rubbers, butyl-based rubbers, and fluororubbers.

When the polymer composition contains additional polymers other than the modified polymer which has been modified by the phenylboronic acid compound of Formula (1), the amount of additional polymers based on 100% by mass of the polymer component content is not limited, and it is preferably 5% by mass or more, more preferably 10% by mass or more, still more preferably 15% by mass or more. The upper limit is not limited, and it is preferably 95% by mass or less, more preferably 90% by mass or less, still more preferably 85% by mass or less. When the amount is within the range indicated above, the advantageous effect tends to be suitably achieved.

Here, the term "polymer component" in the polymer composition refers to a component that contributes to crosslinking and generally corresponds to a polymer which has a weight average molecular weight (Mw) of 10,000 or more and which is not extractable with acetone.

Moreover, the phrases "the amount of modified polymers which have been modified by phenylboronic acid compounds of Formula (1) based on 100% by mass of the polymer component content" and "the amount of additional polymers based on 100% by mass of the polymer component content" mean "the amount of modified polymers which have been modified by phenylboronic acid compounds of Formula (1)" and "the amount of additional polymers" each corresponding to polymer components as defined above, respectively, based on 100% by mass of the polymer component content.

The polymer composition preferably contains a filler. Examples of the filler include fillers known in the rubber field, including inorganic fillers such as silica, carbon black, calcium carbonate, talc, alumina, clay, aluminum hydroxide, aluminum oxide, and mica; and hard-to-disperse fillers. When the polymer composition is applied to a tire component, silica or carbon black is preferred from the standpoint of tire performance.

The total amount of fillers per 100 parts by mass of the polymer component content in the polymer composition is preferably 5 parts by mass or more, more preferably 10 parts by mass or more, still more preferably 15 parts by mass or more. The upper limit is preferably 200 parts by mass or less, more preferably 180 parts by mass or less, still more preferably 160 parts by mass or less. When the total amount is within the range indicated above, tire performance such as wet grip performance tends to be better achieved.

Examples of usable silica include dry silica (anhydrous silica) and wet silica (hydrous silica). Wet silica is preferred among these because it contains a large number of silanol groups. The silica may be commercially available from, for example, Degussa, Rhodia, Tosoh Silica Corporation, Solvay Japan, Tokuyama Corporation, etc.

The nitrogen adsorption specific surface area (N₂SA) of the silica is preferably 10 m²/g or more, more preferably 20 m²/g or more, still more preferably 30 m²/g or more. Moreover, the upper limit of the N₂SA of the silica is not limited, and it is preferably 300 m²/g or less, more preferably 275 m²/g or less, still more preferably 250 m²/g or less. When the N₂SA is within the range indicated above, tire performance such as wet grip performance tends to be better achieved.

Herein, the N₂SA of the silica is determined by a BET method in accordance with ASTM D3037-93.

The amount of silica per 100 parts by mass of the polymer component content in the polymer composition is preferably 5 parts by mass or more, more preferably 10 parts by mass or more, still more preferably 15 parts by mass or more. The upper limit is preferably 200 parts by mass or less, more preferably 180 parts by mass or less, still more preferably 160 parts by mass or less. When the amount is within the range indicated above, tire performance such as wet grip performance tends to be better achieved.

When the polymer composition contains silica, it may contain a silane coupling agent together with the silica.

Any silane coupling agent conventionally used in combination with silica in the rubber industry may be used, and non-limiting examples of usable silane coupling agents include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more. Sulfide or mercapto silane coupling agents are preferred among these.

The amount of silane coupling agents per 100 parts by mass of the silica content in the polymer composition is preferably 3 parts by mass or more, more preferably 6 parts by mass or more. The amount is also preferably 20 parts by mass or less, more preferably 15 parts by mass or less.

Examples of usable carbon black include N134, N110, N220, N234, N219, N339, N330, N326, N351, N550, and N762. These may be used alone or in combinations of two or more. Usable commercial products are available from, for example, Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The nitrogen adsorption specific surface area (N₂SA) of the carbon black is preferably 10 m²/g or more, more preferably 20 m²/g or more, still more preferably 30 m²/g or more. Moreover, the upper limit of the N₂SA of the silica is not limited, and it is preferably 300 m²/g or less, more preferably 275 m²/g or less, still more preferably 250 m²/g or less. When the N₂SA is within the range indicated above, tire performance such as wet grip performance tends to be better achieved.

Herein, the nitrogen adsorption specific surface area of the carbon black can be determined in accordance with JIS K 6217-2:2001.

The amount of carbon black per 100 parts by mass of the polymer component content in the polymer composition is preferably 5 parts by mass or more, more preferably 10 parts by mass or more, still more preferably 15 parts by mass or more. The upper limit is preferably 200 parts by mass or less, more preferably 180 parts by mass or less, still more preferably 160 parts by mass or less. When the amount is within the range indicated above, tire performance such as wet grip performance tends to be better achieved.

The polymer composition may contain a plasticizer. Here, the term "plasticizer" refers to a material that imparts plasticity to polymer components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the polymer component content in the polymer composition is preferably 3 parts by mass or more, more preferably 5 parts by mass or more, still more preferably 7 parts by mass or more. The upper limit is preferably 120 parts by mass or less, more preferably 100 parts by mass or less, still more preferably 90 parts by mass or less. When the amount is within the range indicated above, tire performance such as wet grip performance tends to be better achieved.

Any liquid plasticizer (plasticizer which is liquid at room temperature (25°C)) may be used in the polymer composition, and examples include oils and liquid polymers (e.g., the above-described liquid resins, liquid diene polymers, and liquid farnesene polymers). Here, the liquid polymers include, in addition to the above-described liquid resins, liquid diene polymers, and liquid farnesene polymers, modified polymers obtained by reacting these liquid resins, etc. with phenylboronic acid compounds of Formula (1). These liquid plasticizers may be used alone or in combinations of two or more.

The amount of liquid plasticizers per 100 parts by mass of the polymer component content in the polymer composition is preferably 3 parts by mass or more, more preferably 5 parts by mass or more, still more preferably 7 parts by mass or more. The upper limit is preferably 120 parts by mass or less, more preferably 100 parts by mass or less, still more preferably 90 parts by mass or less. When the amount is within the range indicated above, tire performance such as wet grip performance tends to be better achieved. Here, the amount of liquid plasticizers includes the amount of oils contained in the oil-extended rubbers, if used.

Examples of oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, or plant oils are preferred among these.

Examples of the resins (resins which are solid at room temperature (25°C)) usable in the polymer composition include the above-described aromatic vinyl polymers, coumarone-indene resins, coumarone resins, indene resins, phenol resins, rosin resins, petroleum resins, terpene resins, and acrylic resins, all of which are solid at room temperature (25°C). The resins also include, in addition to the above-described aromatic vinyl polymers, coumarone-indene resins, coumarone resins, indene resins, phenol resins, rosin resins, petroleum resins, terpene resins, and acrylic resins, all of which are solid at room temperature (25°C), modified polymers obtained by reacting these aromatic vinyl polymers, etc. with phenylboronic acid compounds of Formula (1). The resins may be hydrogenated. These resins may be used alone or in combinations of two or more. Aromatic vinyl polymers, petroleum resins, and terpene resins are preferred among these.

The amount of the above-described resins per 100 parts by mass of the polymer component content in the polymer composition is preferably 3 parts by mass or more, more preferably 5 parts by mass or more, still more preferably 7 parts by mass or more. The upper limit is preferably 120 parts by mass or less, more preferably 100 parts by mass or less, still more preferably 90 parts by mass or less. When the amount is within the range indicated above, tire performance such as wet grip performance tends to be better achieved.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

From the standpoint of properties such as crack resistance and ozone resistance, the polymer composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the polymer component content in the polymer composition is preferably 0.2 parts by mass or more, more preferably 0.5 parts by mass or more. The amount is preferably 7.0 parts by mass or less, more preferably 4.0 parts by mass or less.

The polymer composition may contain stearic acid. The amount of stearic acid per 100 parts by mass of the polymer component content in the polymer composition is preferably 0.5 to 10 parts by mass, more preferably 0.5 to 5 parts by mass.

Here, conventionally known stearic acid may be used, including, for example, those available from NOF Corporation, Kao Corporation, FUJIFILM Wako Pure Chemical Corporation, Chiba Fatty Acid Co., Ltd., etc.

The polymer composition may contain zinc oxide. The amount of zinc oxide per 100 parts by mass of the polymer component content in the polymer composition is preferably 0.5 to 10 parts by mass, more preferably 1 to 5 parts by mass.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The polymer composition may contain a wax. The amount of waxes per 100 parts by mass of the polymer component content in the polymer composition is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of these waxes. Usable commercial products are available from Ouchi Shinko Chemical Industrial Co., Ltd., Nippon Seiro Co., Ltd., Seiko Chemical Co., Ltd., etc.

The polymer composition may contain sulfur.

The amount of sulfur per 100 parts by mass of the polymer component content in the polymer composition is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The polymer composition may contain a vulcanization accelerator.

The amount of vulcanization accelerators per 100 parts by mass of the polymer component content in the polymer composition is usually 0.3 to 10 parts by mass, preferably 0.5 to 7 parts by mass.

Any type of vulcanization accelerator may be used including usual ones. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide or guanidine vulcanization accelerators are preferred among these.

The polymer composition may contain any appropriate additive usually used in the application field, such as a release agent or pigment, in addition to the above-mentioned components.

The polymer composition may be prepared by known methods. For example, it may be prepared by kneading the components in a rubber kneading machine such as an open roll mill or Banbury mixer, optionally followed by crosslinking. Here, with regard to the kneading conditions, the kneading temperature is usually 50°C to 200°C, preferably 80°C to 190°C, and the kneading time is usually 30 seconds to 30 minutes, preferably 1 minute to 30 minutes.

The polymer composition can be used in tires, footwear soles, floor materials, vibration-proof materials, seismic isolators, butyl frame materials, belts, hoses, packing materials, medical stoppers, and other industrial rubber products. In particular, the polymer composition is preferably used as a polymer composition for tires due to its excellent tire performance such as wet grip performance.

The polymer composition is applicable to any tire component. Examples include cap treads, sidewalls, base treads, bead apexes, clinch apexes, innerliners, undertreads, breaker toppings, ply toppings, and any other tire component. Among these, it is suitably applicable to cap treads due to its excellent wet grip performance, etc.

### <Tire>

The polymer composition is suitable for use in a tire. Examples of the tire include pneumatic tires and non-pneumatic tires. Pneumatic tires are preferred among these. In particular, the tire can be suitably used as a summer tire, winter tire (studless winter tire, snow tire, studded tire, etc.), all-season tire, etc. The tire may be used as a tire for passenger vehicles, large passenger vehicles, large SUVs, heavy duty vehicles such as trucks and buses, light trucks, or motorcycles, or as a racing tire (high performance tire), etc. Among these, the tire can be suitably used as a tire for passenger vehicles or light trucks.

The tire can be produced from the polymer composition by usual methods. For example, the tire may be produced by extruding the unvulcanized polymer composition containing various materials into the shape of a tire component, assembling it with other tire components in a tire building machine in a usual manner to build an unvulcanized tire, and then heating and pressing the unvulcanized tire in a vulcanizer.

### EXAMPLES

The present invention will be specifically described with reference to examples, but the present inventions is not limited to the examples.

### <Synthesis of phenylboronic acid compound>

A phenylboronic acid compound C (phenylboronic acid compound of Formula (1)) was synthesized via the synthetic route shown in FIG. 1.

Specifically, it was synthesized by the following method.

The phenylboronic acid compound C was synthesized by reacting a phenylboronic acid compound B with an amine compound in methanol at room temperature overnight and reducing the reaction product with sodium borohydride (NaBH₄), followed by deprotection of the tert-butoxycarbonyl (Boc) group with hydrochloric acid (HCl).

The ¹H-NMR spectrum of the synthetic product shown in FIG. 2 demonstrates the synthesis of the phenylboronic acid compound C (phenylboronic acid compound of Formula (1)).

### <Synthesis of modified polymers>

Modified polymers A to D (modified polymers which have been modified by phenylboronic acid compounds of Formula (1)) are synthesized via the synthetic routes shown in FIG. 3.

Specifically, they are synthesized by the following methods.

### (Synthesis of modified polymer A)

A stirring bar, ENR25, and THF are added to a three-necked flask, and they are stirred for dissolution. A phenylboronic acid compound A is added to the solution, followed by reaction at 70°C for 24 hours and then precipitation in methanol. The precipitate is air-dried in a draft chamber and dried at 70°C to obtain a modified polymer A.

### (Synthesis of modified polymer B)

A stirring bar, ENR25, and THF are added to a three-necked flask, and they are stirred for dissolution. A phenylboronic acid compound C is added to the solution, followed by reaction at 70°C for 24 hours and then precipitation in methanol. The precipitate is air-dried in a draft chamber and dried at 70°C to obtain a modified polymer B.

### (Synthesis of modified polymer C)

A phenylboronic acid compound C and DMTMM are separately dissolved in water in a beaker, followed by adding them to a carboxylic acid-modified SBR latex. The mixture is stirred at room temperature for 48 hours and then solidified with a 1% aqueous sulfuric acid solution. The solids are dried to obtain a modified polymer C.

### (Synthesis of modified polymer D)

A carboxyl group-modified liquid polyisoprene and a phenylboronic acid compound C were added to chloroform. The mixture was subjected to a dehydration-condensation reaction using EDC/HOBt to obtain a modified polymer D. The modified polymer D was purified by washing with methanol.

Here, the following materials were used in the syntheses of the phenylboronic acid compound B and the modified polymers A to D in FIGS. 1 and 3.
Phenylboronic acid compound B: a product of Boron Molecular Pty Limited (the compound B in FIG. 1)
Amine compound: a product of Combi-Blocks (the amine compound in FIG. 1)
Phenylboronic acid compound A: a product of Combi-Blocks (the compound A in FIG. 3)
Sodium borohydride (NaBH₄): a product of FUJIFILM Wako Pure Chemical Corporation
Hydrochloric acid (HCl): a product of FUJIFILM Wako Pure Chemical Corporation
ENR: ENR25 (degree of epoxidation: 25% by mass) available from GUTHRIE POLYMER SDN BHD
Carboxylic acid-modified SBR: carboxylic acid-modified SBR latex available from Asahi Kasei Corporation, JSR, or NIPPON A&L INC.
Carboxyl group-modified liquid polyisoprene: LIR-410 available from Kuraray Co., Ltd., molecular weight: 30,000, number of carboxyl groups per molecule: 10, glass transition temperature: -59°C
EDC: 1-(3-dimethylaminopropyl)-3-ethylcarbodiimide available from TCI
HOBt: 1-hydroxybenzotriazole available from TCI

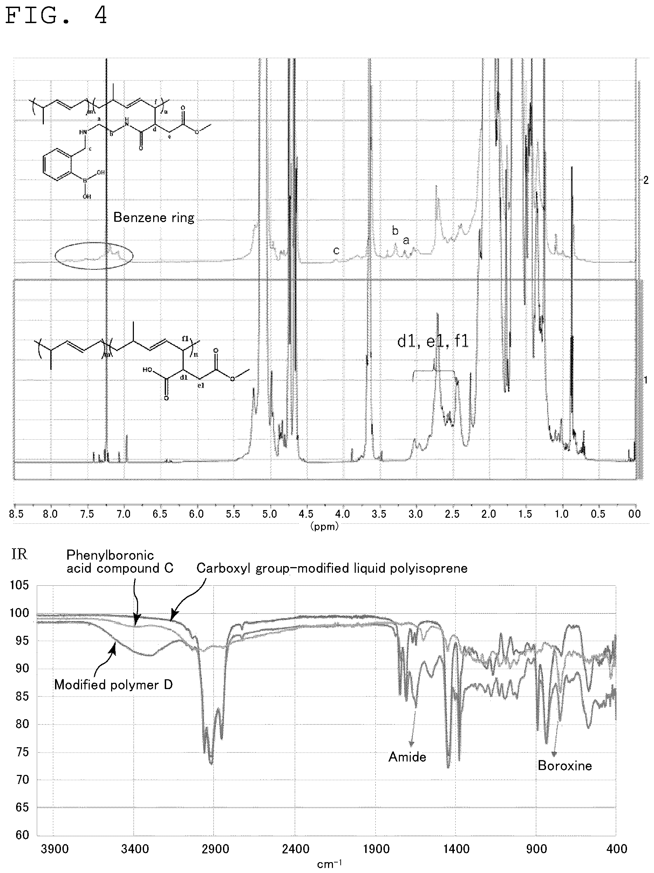

The IR spectra and ¹H-NMR spectra shown in FIG. 4 demonstrate the synthesis of the phenylboronic acid compound C (phenylboronic acid compound of Formula (1)), the carboxyl group-modified liquid polyisoprene, and the liquid polyisoprene modified by the phenylboronic acid compound C (modified polymer D).

Moreover, it is believed that the modified polymers A to C (modified polymers which have been modified by phenylboronic acid compounds of Formula (1)) have been synthesized.

As described above, it was found to be possible to synthesize phenylboronic acid compounds of Formula (1). Also, it is believed to be possible to synthesize polymers modified by phenylboronic acid compounds of Formula (1).

When the obtained modified polymers A to D are repeatedly subjected to drying at room temperature and normal pressure to a constant weight and immersion in water for wetting with water, it is believed that three molecules are reversibly dehydrated and condensed to form boroxine (boroxine crosslinks), and then the formed boroxine crosslinks are broken upon contact with water. Thus, the modified polymers A to D are believed to have the ability to undergo a reversible change in physical properties in response to water.

In particular, the modified polymer D became a transparent gel with loss of fluidity, confirming the progress of crosslinking. Moreover, the elastomer obtained by removing the solvent from the gel was moldable at 100°C. This suggests that the crosslinking is thermally reversible.

Moreover, when such a modified polymer having the ability to undergo a reversible change in physical properties in response to water is used in a rubber composition for tires, it is believed that the elastic modulus can be reduced upon contact with the wet road surface, so that during driving on the wet road surface, the area in contact with the road surface can be increased to increase friction and enhance loss, resulting in improved wet grip performance.

Furthermore, it is believed that a phenylboronic acid compound of Formula (1) is highly reactive and can react with various polymers. It is therefore believed to be possible to provide various polymers modified by the phenylboronic acid compound of Formula (1).

### Exemplary embodiments of the present invention include:

### Embodiment 1. A phenylboronic acid compound, represented by the following Formula (1-1):

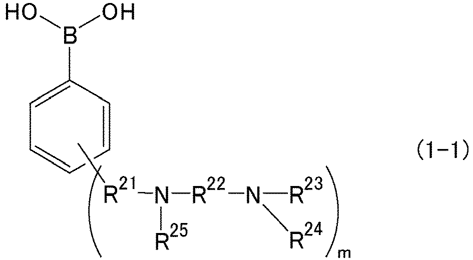

wherein R²¹ and R²² are the same or different and each represent an optionally substituted divalent hydrocarbon group that optionally contains a heteroatom, R²³ to R²⁵ are the same or different and each represent a hydrogen atom or an optionally substituted monovalent hydrocarbon group that optionally contains a heteroatom, and m represents an integer of 1 to 5.

Embodiment 2. A modified polymer which has been modified by a phenylboronic acid compound represented by the following Formula (1): 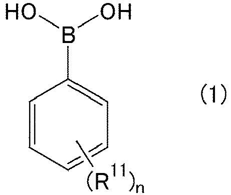 wherein each R¹¹ is the same or different and represents an optionally substituted monovalent hydrocarbon group that optionally contains a heteroatom, and n represents an integer of 1 to 5.

Embodiment 3. The modified polymer according to Embodiment 2,
wherein a polymer constituting a backbone of the modified polymer is at least one selected from the group consisting of isoprene-based rubbers, acrylonitrile-butadiene rubbers, polybutadiene rubbers, and styrene-butadiene rubbers.

Embodiment 4. The modified polymer according to Embodiment 2 or 3, which is solid at 25°C and has a weight average molecular weight of 10000 or more.

Embodiment 5. The modified polymer according to Embodiment 2, which is liquid at 25°C.

Embodiment 6. A polymer composition, containing the modified polymer according to any one of Embodiments 2 to 5.

Embodiment 7. The polymer composition according to Embodiment 6, containing at least one rubber component including the modified polymer which has been modified by the phenylboronic acid compound of Formula (1) and is solid at 25°C.

Embodiment 8. The polymer composition according to Embodiment 6, containing at least one liquid polymer including the modified polymer which has been modified by the phenylboronic acid compound of Formula (1) and is liquid at 25°C.

Embodiment 9. A tire, including a tire component including the polymer composition according to any one of Embodiments 6 to 8.

## Claims

1. A phenylboronic acid compound, represented by the following Formula (1-1): 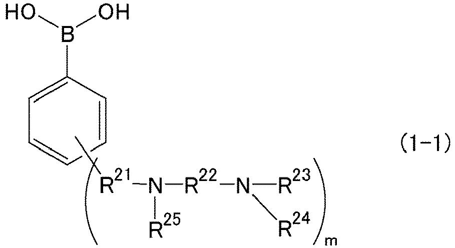 wherein R²¹ and R²² are the same or different and each represent an optionally substituted divalent hydrocarbon group that optionally contains a heteroatom, R²³ to R²⁵ are the same or different and each represent a hydrogen atom or an optionally substituted monovalent hydrocarbon group that optionally contains a heteroatom, and m represents an integer of 1 to 5.

2. A modified polymer which has been modified by a phenylboronic acid compound represented by the following Formula (1): 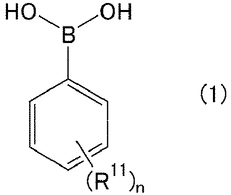 wherein each R¹¹ is the same or different and represents an optionally substituted monovalent hydrocarbon group that optionally contains a heteroatom, and n represents an integer of 1 to 5.

3. The modified polymer according to claim 2,
wherein a polymer constituting a backbone of the modified polymer is at least one selected from the group consisting of isoprene-based rubbers, acrylonitrile-butadiene rubbers, polybutadiene rubbers, and styrene-butadiene rubbers.

4. The modified polymer according to claim 2 or 3, which is solid at 25°C and has a weight average molecular weight of 10000 or more.

5. The modified polymer according to claim 2, which is liquid at 25°C.

6. A polymer composition, comprising the modified polymer according to any one of claims 2 to 5.

7. The polymer composition according to claim 6, comprising at least one rubber component including the modified polymer which has been modified by the phenylboronic acid compound of Formula (1) and is solid at 25°C.

8. The polymer composition according to claim 6, comprising at least one liquid polymer including the modified polymer which has been modified by the phenylboronic acid compound of Formula (1) and is liquid at 25°C.

9. A tire, comprising a tire component comprising the polymer composition according to any one of claims 6 to 8.

## Amended claims

### Amended claims under Art. 19.1 PCT

1. (Cancelled)

2. (Amended). A modified polymer which has been modified by a phenylboronic acid compound represented by the following Formula (1): 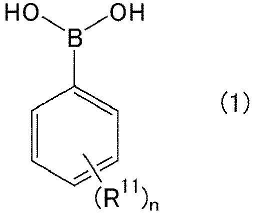 wherein each R¹¹ is the same or different and represents a monovalent hydrocarbon group having a nitrogen atom-containing group, and n represents an integer of 1 to 5.

3. The modified polymer according to claim 2,
wherein a polymer constituting a backbone of the modified polymer is at least one selected from the group consisting of isoprene-based rubbers, acrylonitrile-butadiene rubbers, polybutadiene rubbers, and styrene-butadiene rubbers.

4. The modified polymer according to claim 2 or 3, which is solid at 25°C and has a weight average molecular weight of 10000 or more.

5. The modified polymer according to claim 2, which is liquid at 25°C.

6. A polymer composition, comprising the modified polymer according to any one of claims 2 to 5.

7. The polymer composition according to claim 6, comprising at least one rubber component including the modified polymer which has been modified by the phenylboronic acid compound of Formula (1) and is solid at 25°C.

8. The polymer composition according to claim 6, comprising at least one liquid polymer including the modified polymer which has been modified by the phenylboronic acid compound of Formula (1) and is liquid at 25°C.

9. A tire, comprising a tire component comprising the polymer composition according to any one of claims 6 to 8.

Statement under Art. 19.1 PCT

This claim is cancelled.
This claim has been amended to include the limitation "each R¹¹ in Formula (1) is the same or different and represents a monovalent hydrocarbon group having a nitrogen atom-containing group" which is supported by paragraph [0012] in the specification as filed.
